# EUROPÄISCHE PATENTSCHRIFT

(11) **EP 1 068 126 B1**
(45) Veröffentlichungstag und Bekanntmachung des Hinweises auf die Patenterteilung: **29.05.2002**
(21) Anmeldenummer: 99915726.6
(22) Anmeldetag: 30.03.1999
(51) Int. Cl.: B62D 53/08

(54) **SATTELKUPPLUNG**
FIFTH WHEEL
SELLETTE D'ATTELAGE

(30) Priorität: 31.03.1998 DE 19814274
(43) Veröffentlichungstag der Anmeldung: 17.01.2001
(73) Patentinhaber: Jost-Werke GmbH & Co. KG, 60528 Frankfurt am Main (DE)
(72) Erfinder: ALGÜERA GALLEGO, Josè Manuel, D-63739 Aschaffenburg (DE); MATHIS, Frieder, D-68647 Biblis (DE); POHL, Wolfgang, D-63303 Dreieich (DE); SCHNEIDER, Martin, D-63263 Neu-Isenburg (DE); SPITZ, Rainer, D-65347 Eltville (DE)
(74) Vertreter: Fuchs Mehler Weiss & Fritzsche
(86) Internationale Anmeldenummer: EP9902190
(87) Internationale Veröffentlichungsnummer: WO9950130

(56) Entgegenhaltungen:
- WO-A-93/00248
- DE-A- 3 741 330

## Beschreibung

Die Erfindung betrifft eine Sattelkupplung zur gelenkigen Verbindung einer Sattelzugmaschine mit einem Sattelanhänger mit einer auf der Sattelzugmaschine gehalterten Sattelkupplungsplatte, die als Auflagefläche mindestens einen bogenförmigen Gleitbelag besitzt, der an der Sattelkupplungsplatte verdrehsicher befestigt ist.

Sattelkupplungen dienen zum formschlüssigen, jedoch gelenkigen Verbinden einer Sattelzugmaschine mit einem Sattelanhänger, auch Sattelauflieger genannt, die dann zusammen einen sogenannten Sattelzug bilden. Die Sattelkupplung weist eine Sattelkupplungsplatte mit einem V-förmigen oder maulartigen Einführausschnitt, auch Kupplungs- oder Fangmaul genannt, auf, der beidseitig von je einem etwas nach unten geneigten Horn begrenzt wird. Der Einführausschnitt, das Kupplungsmaul, mündet in eine zentrale Ausnehmung ein, in der ein Verschleißring angebracht sein kann. Beidseitig des Verschleißringes befinden sich Schloßteile, insbesondere ein Verschlußhaken, die bei geöffneter Sattelkupplung außer Eingriff mit der zentralen Ausnehmung sind. Die Sattelkupplungsplatte ist dabei überwiegend über Lagerböcke und gegebenenfalls eine Montageplatte mit dem Rahmen der Sattelzugmaschine fest verbunden.

Am Sattelauflieger befindet sich an der Unterseite des vorderen Endes eine Aufliegerplatte mit einem daran angeordneten, nach unten weisenden Zugsattelzapfen, Königszapfen genannt. Beim Kuppeln wird dieser Königszapfen, geführt durch das Kupplungsmaul in der Sattelkupplungsplatte, in deren zentrale Ausnehmung eingeschoben, bis er in Anlage am Verschleißring kommt. Die Aufliegerplatte bildet dabei sozusagen die Gegenplatte zu der Sattelkupplungsplatte. Sobald der Königszapfen am Verschleißring anliegt, werden die Schloßteile in Schließstellung gebracht, wobei der Verschlußhaken den Königszapfen formschlüssig, jedoch drehbeweglich, umfaßt.

Sattelkupplungen der vorstehenden Art sind allgemein bekannt und werden im großen Umfang standardmäßig (DIN74080 = ISO 337) bei Sattelzügen eingesetzt.

Ein wesentliches prinzipielles Problem bei derartigen Sattelkupplungen ist die Reibung zwischen der Sattelkupplungsplatte und der Aufliegerplatte, insbesondere aufgrund der ständigen Relativbewegungen zwischen ihnen bei Kurvenfahrt, da die Sattelkupplungsplatte im Normalfall typischerweise unverdrehbar um eine horizontale Achse an der Sattelzugmaschine befestigt ist.

Es sind zahlreiche Wege beschritten worden, um diese prinzipbedingte Reibung zu mindern.

Ein Weg besteht in bekannter Weise (DE 25 35 151 C; EP 0 130 402 B) darin, eine sogenannte Plattenschmierung einzusetzen, bei der in regelmäßigen, relativ kurzen Wartungsintervallen Schmierfett zwischen beide Platten gebracht wird.

Alternativ dazu oder ergänzend zu der Plattenschmierung sind Sattelkupplungen bekannt (DE 35 30 467 A; EP 0 117 319 B; DE 44 18 533 C; DE 296 03 641 U), bei denen eine Beschichtung oder Befestigung von Antifriktionsmaterialien an der Sattelkupplungsplatte vorgesehen ist.

Üblicherweise besitzen diese Antifriktionsmaterialien die Form von bogenförmigen Gleitbelägen, die vorzugsweise aus Kunststoffmaterial bestehen. und die in entsprechenden Vertiefungen der metallischen Sammelsattelkupplungsplatte eingelassen und dort befestigt sind, beispielsweise durch Verkleben oder vorzugsweise durch Verschrauben. Der Gleitbelag kann hufeisenförmig ausgebildet sein oder zwei oder mehrere gebogene, etwa halbkreisförmige Gleitbeläge, wie im Fall der o. a. DE 296 03 641 U, aufweisen, die mit der Sattelkupplungsplatte verschraubt sind.

Bei derartigen Sattelkupplungen mit auf die Sattelkupplungsplatte aufgeschraubten Gleitbelägen treten nachstehende Probleme auf.

Da der Gleitbelag nach oben über die metallische Sattelkupplungsplatte vorsteht, damit der Sattelanhänger mit seiner Aufliegerplatte darauf gleiten kann, werden aufgrund der betrieblichen Drehungen des Sattelanhängers die Befestigungsschrauben des Gleitbelages stark auf Scherung beansprucht, so daß unter Umständen die Befestigungschrauben abreißen können.

Das Material des Gleitbelages hat üblicherweise einen höheren Wärmeausdehnungskoeffizienten als Stahl, das Material aus dem die Sattelkupplungsplatte selbst hergestellt ist. Durch Wärmeeinwirkung, z. B. durch Sonne oder durch hohe Außentemperaturen beim Einsatz von Sattelschleppern in heißen Gegenden, dehnt sich dann der Gleitbelag sehr stark aus, was zu einer zusätzlichen mechanischen Belastung der Befestigungsschrauben führt.

Um diesen Problemen beizukommen, ist in der vorgenannten DE 296 03 641 U, von der die Erfindung ausgeht, vorgesehen, die Fläche der Vertiefung etwas größer zu machen als es zur Aufnahme des Gleitbelages notwendig wäre. Der Gleitbelag kann sich daher zwar ausdehnen, ohne daß er großen Spannungen ausgesetzt wird und zerbricht, jedoch bleibt die mechanische Belastung der Befestigungsschrauben bestehen.

Zwar sollen auch durch die Ränder der Vertiefung, in die der Gleitbelag eingelassen ist, extrem auf die Gleitbeläge einwirkende Querkräfte aufgefangen werden, da die Gleitbeläge sich durch die Berührung mit der Innenwand der Vertiefung seitlich nicht verschieben können, jedoch setzt dieser Effekt erst ein, wenn die Verschiebung den Dehnungsspalt überwunden hat, so daß die starke Scherbelastung auf die Befestigungsschrauben bleibt.

Eine verdrehsichere und eine begrenzte Beweglichkeit zulassende formschlüssige Verbindung zwischen Gleitbelag und Sattelkupplungsplatte ist in der US 5 482 308 A sowie in der EP 0 792 793 A beschrieben.

In der US 5 482 308 A wird die Verbindung durch einen trapezoiden Überlapp der Sattelkupplungsplatte mit der Gleitplatte bzw. auch durch Keile, die von dem Gleitbelag seitlich in den Rand der Sattelkupplungsplatte übergehen, bewerkstelligt. Die trapezoiden Vorsprünge des Gleitbelages müssen mittels trapezoider Befestigungsblöcke und beispielsweise Schrauben gesichert werden. Dadurch wird das Zusammenbauen der Sattelkupplungsplatte bzw. das Wechseln des Gleitbelages sehr aufwendig. Bei Scherung oder thermischer Ausdehnung greifen die Kräfte primär an den trapezoiden Vorsprüngen an, an denen daher schnell Materialermüdungen auftreten.

In der EP 0 792 793 A weist der Gleitbelag an der Unterseite Auswülste auf, die formschlüssig in dazu komplementäre Öffnungen in der Sattelkupplungsplatte passen. Die Sattelkupplungsplatte und der Gleitbelag werden dabei zusätzlich durch eine durchgehende Schraube und eine Gegenmutter zusammengehalten. Zur Befestigung sind zwingend zusätzliche Bauteile, wie z.B. eine durchgehende Schraube mit Gegenmutter, notwendig. Dies erhöht den Aufwand beim Zusammenbauen der Sattelkupplungsplatte bzw. Wechseln der Gleitbeläge. An den Befestigungsstellen ist außerdem der Materialverschleiß durch Scherkräfte oder thermische Ausdehnung des Gleitbelages deutlich erhöht.

Der Erfindung liegt die Aufgabe zugrunde, die eingangs bezeichnete Sattelkupplung so auszubilden, daß eine auch bei starken einwirkenden Scherkräften sichere und thermisch ausdehnungsfähige Befestigung des Gleitbelages gewährleistet ist.

Die Lösung dieser Aufgabe gelingt gemäß der Erfindung dadurch, daß Formschluß-Verbindungselemente an der Unterseite des Gleitbelages als radial sich von einem virtuellen Mittelpunkt in der Ausnehmung in der Sattelkupplungsplatte aus erstreckende Stege und die Formschluß-Verbindungselemente an der Oberseite der Sattelkupplungsplatte als dazu komplementäre Nuten ausgebildet sind.

Die formschlüssige Verbindung nimmt, entsprechend ausgebildet, die Scherkräfte auf und ermöglicht durch die gegenseitige Verschiebbarkeit der Verbindungselemente des Formschlusses eine Wärmeausdehnung der Gleitplatte ohne bemerkenswerte mechanische Belastung der formschlüssigen Verbindung.

Aufgrund der radialen Ausrichtung der Stege und Nuten bezogen auf den virtuellen Dehnungsmittelpunkt in der zentralen Ausnehmung kann sich der Gleitbelag in radialer Richtung ausdehnen, ohne daß der Formschluß dadurch beeinträchtigt würde.

Da die Stege/Nuten senkrecht zu den angreifenden Drehkräften, d. h. der Drehrichtung der Sattelkupplungsplatte verlaufen, ist der Gleitbelag gegen Verdrehen gesichert, wobei die formschlüssige Verbindung die Querkräfte ohne weiteres aufnimmt.

Durch die rippenartigen radialen Stege an dem Gleitbelag wird auch gleichzeitig eine Versteifung der Gleitplatte erreicht. Dadurch kann wiederum örtlich die Wandstärke zwischen den Rippen, den Stegen, deutlich verringert werden, wodurch wiederum mit Vorteil die Bauhöhe der Sattelkupplung sowie das Gewicht des Gleitbelages deutlich verringert werden können.

Um betrieblich einen sicheren Formschluß zu gewährleisten, sind gemäß einer Weiterbildung der Erfindung Niederhalterelemente in Form von Schrauben vorgesehen, die den Gleitbelag mit der Sattelkupplungsplatte ohne Aufnahme von Scherkräften miteinander verbinden.

Die Schrauben haben daher in diesem Fall nur noch die Funktion einer Verliersicherung, brauchen aber keine Kräfte mehr aufzunehmen. Sie können daher entsprechend mit geringerer Stärke dimensioniert werden.

Alternativ sind gemäß einer weiteren Ausgestaltung der Erfindung, um betrieblich einen sicheren Formschluß zu gewährleisten, Niederhalterelemente in Form von clipsartig ausgebildeten, elastisch nachgebenden Rastelementen am freien Ende der Stege vorgesehen, die in den Nuten der Sattelkupplungsplatte einrastbar sind. Dabei können die Rastelemente einen Wulst oder einen Außenkragen bilden.

Bei einer derartigen Ausbildung ist auch die Montage des Gleitbelages mit Vorteil sehr einfach. Der G1eitbela wird nur noch von oben mit seinen Stegen in die Nuten der Sattelkupplungsplatte eingedrückt, in denen dann die Stege unter Vollendung des Formschlusses einrasten.

In einer bevorzugten Ausführungsform weisen die Stege an der von der Sattelkupplungsplatte angewandten Seite Ausnehmungen auf, die der Aufnahme von Spreizelementen dienen, die die Rastelemente im eingerasteten Zustand arretieren. Die Tiefe der Ausnehmungen kann dabei der Tiefe der Stege entsprechen. Die Spreizelemente können mit einem Handgriff in die Ausnehmungen eingeführt werden und drücken die Rastelemente gegen die Sattelkupplungsplatte.

Weitere Vorteile sowie Ausgestaltungen der Erfindung ergeben sich anhand der Beschreibung von in den Zeichnungen dargestellten Ausführungsbeispielen.

Es zeigen:
- Fig. 1: eine Draufsicht auf die erfindungsgemäße Sattelkupplungsplatte bei abgenommenen Gleitbelägen,
- Fig. 2: eine querschnittliche Teilansicht der erfindungsgemäßen Sattelkupplung entlang der Schnittlinie I-I in Fig. 2 mit eingelassenem Gleitbelag und einem den Formschluß gewährleistenden Außenkragen,
- Fig. 3: ebenfalls eine querschnittliche Teilansicht entsprechend Fig. 2 mit in die Sattelkupplungsplatte formschlüssig eingelassener Gleitbeläge und Sicherung des Formschlusses durch einen Innenkragen.
- Fig. 4: eine herkömmliche Sattelkupplung mit zwei gebogenen halbkreisförmigen Gleitbelägen,
- Fig.5a+b: weitere querschnittliche Teilansicht entsprechend Fig. 2 ohne und mit Spreizelement.

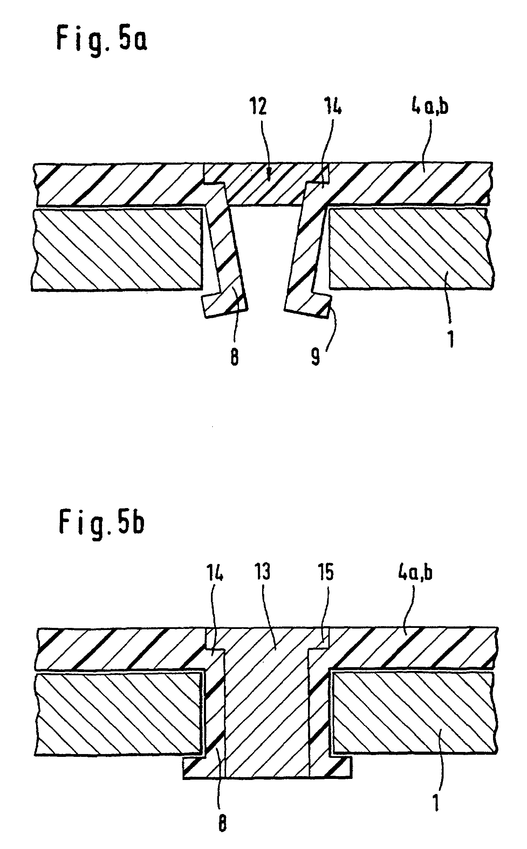

Die in Fig. 4 dargestellte Sattelkupplung dient zur gelenkigen Verbindung einer Sattelzugmaschine mit einem Sattelanhänger. Sie besitzt eine auf der Sattelzugmaschine über Lagerböcke 5 gehalterte Sattelkupplungsplatte 1, die ein V-förmiges Kupplungsmaul 2 mit einer zentralen Ausnehmung 3 zur verriegelbaren Aufnahme eines am nicht dargestellten Sattelanhänger fest angebrachten Königszapfen aufweist. Die Sattelkupplungsplatte 1 besitzt als Auflagefläche zwei gebogene, etwa halbkreisförmige Gleitbeläge 4a und 4b, die in diesem Beispiel in entsprechenden Vertiefungen der Sattelkupplungsplatte 1 eingelassen und dort auf bekannte Weise befestigt sind. Es können auch mehr als zwei Gleitbeläge vorgesehen sein. Auch können die Gleitbeläge auf der Platte liegend befestigt sein.

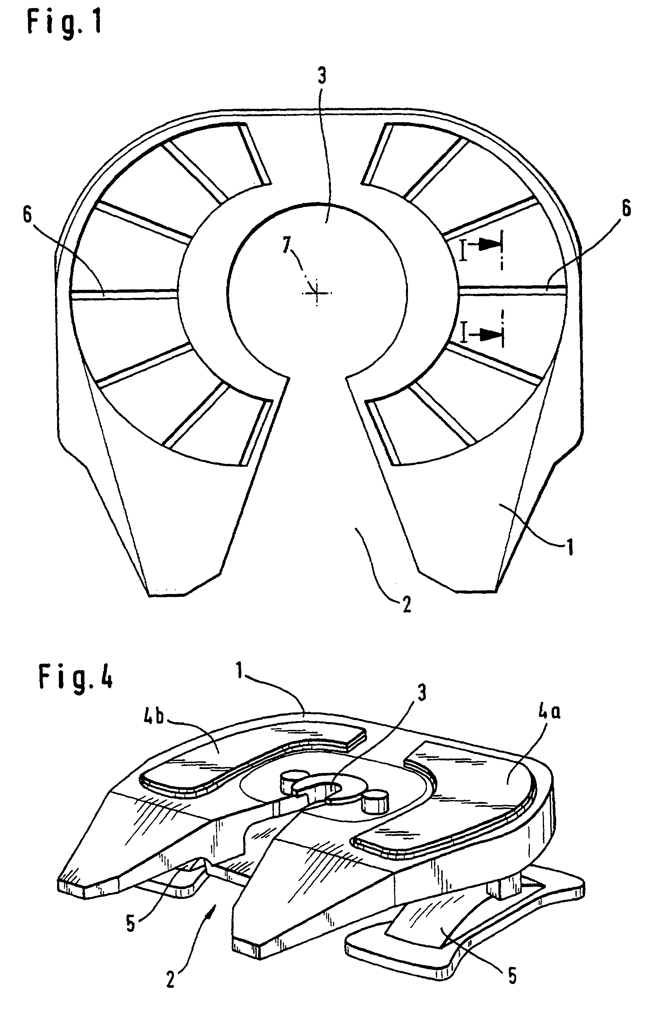

Die erfindungsgemäße, in den Figuren 1 bis 3 und 5 dargestellte Sattelkupplung weist eine formschlüssige Verbindung zwischen den Gleitbelägen 4a, 4b und der Sattelkupplungsplatte 1 auf, indem an der Unterseite der Gleitbeläge einerseits und an der Oberseite der Sattelkupplungsplatte 1 andererseits Verbindungselemente für einen verdrehsicheren, eine Wärmeausdehnung der Gleitplatten zulassenden Formschluß vorgesehen sind.

Dabei sind gem. Fig. 1 die Formschluß-Verbindungselemente an der Oberseite der Sattelkupplungsplatte 1 als Nuten 6 ausgebildet, die sich radial von einem virtuellen Mittelpunkt 7 in der Ausnehmung 3 aus erstrecken. Entsprechend sind die Formschluß-Verbindungselemente an der Unterseite der Gleitbeläge als radial sich erstreckende Stege 8 ausgebildet. Die Gleitbeläge können sowohl peripher innen als auch außen bogenförmige Stege aufweisen, für die jedoch keine Nuten in der Sattelkupplungsplatte ausgeformt sind, damit die ungehinderte Ausdehnung in radialer Richtung gewährleistet ist. Zusätzlich zu dem Formschluß über die Stege 8 können noch Schrauben als Verliersicherung vorgesehen sein, die sich vorzugsweise im Bereich der Stege befinden, damit aufgrund der Wärmeausdehnung die Stege 8 nicht aus den Nuten 6 herausgedrückt werden können. Die Durchmesser der Löcher für die Schrauben müssen um einen bestimmten Betrag größer als der Durchmesser der Schrauben sein, damit eine entsprechende Bewegungsfreiheit gegeben ist.

Aufgrund der radialen Ausrichtung der Stege 8 und der Nuten 6, bezogen auf den virtuellen Dehnungsmittelpunkt 7 in der zentralen Ausnehmung 3, können sich die Gleitbeläge 4a, b in radialer Richtung ausdehnen. Da andererseits die Stege 8 und die Nuten 6 senkrecht zu den angreifenden Drehkräften, d.h. der Drehrichtung der Sattelkupplungsplatte verlaufen, sind die Gleitbeläge 4a, b gegen Verdrehen gesichert, wobei die formschlüssige Verbindung zwischen Stegen und Nuten die Querkräfte ohne weiteres aufnimmt.

Wie die Figur 1 erkennen läßt, wird durch die rippenartigen radialen Stege 8 auch gleichzeitig eine Versteifung der Gleitplatten erreicht. Dadurch kann wiederum örtlich die Wandstärke zwischen den Rippen, den Stegen 8, deutlich verringert werden, wodurch wiederum mit Vorteil die Bauhöhe der Sattelkupplungsplatte sowie das Gewicht der Gleitbeläge deutlich verringert werden können.

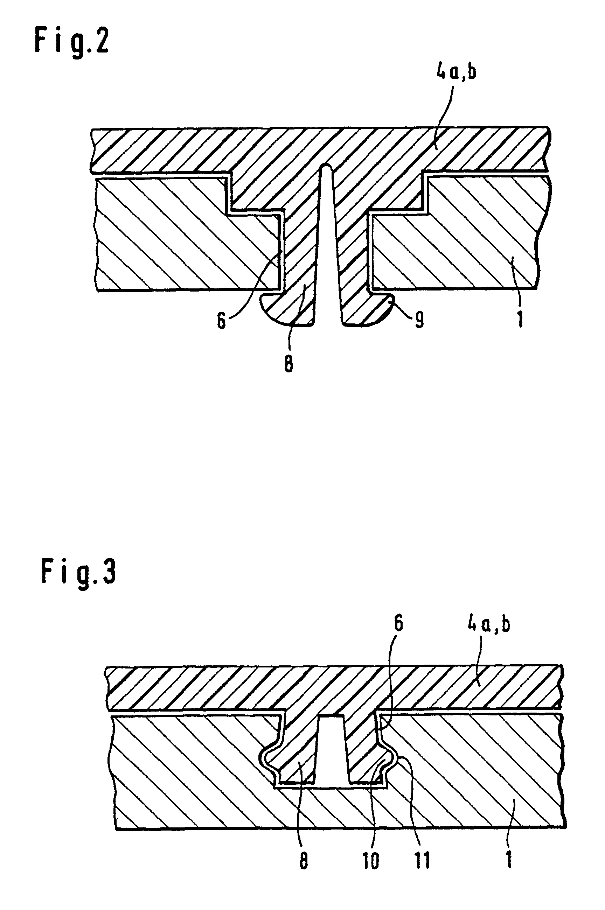

Zur Aufrechterhaltung des Formschlusses sind in den Figuren 2 und 3 zwei Ausführungsformen von Niederhalterelementen in Form von clipsartig ausgebildeten elastisch nachgebenden Rastelementen am freien Ende der Stege 8 vorgesehen, die in den Nuten 6 der Sattelkupplungsplatte 1 einrastbar sind. Bei einer derartigen Ausbildung ist die Montage der Gleitbeläge 4a, b mit Vorteil sehr einfach. Die Gleitbeläge werden nur noch von oben mit ihren Stegen 8 in die Nuten 6 der Sattelkupplungsplatte 1 eingedrückt, in denen dann die Stege einrasten.

Bei der Ausführungsform nach Figur 2 entspricht die Tiefe der Nuten 6 der Dicke der Sattelkupplungsplatte 1, d. h. die Nuten bilden eine entsprechende Öffnung in der Sattelkupplungsplatte. Die Rastelemente der geschlitzten Stege 8 sind als Außenkragen 9 ausgebildet, die mit der Unterseite der Sattelkupplungsplatte 1 verrasten.

Bei der Ausführungform nach Figur 3 entspricht die Tiefe der Nuten 6 in der Sattelkupplungsplatte 1 nur einem Teil ihrer Dicke und die Rastelemente der Stege 8 sind als Aufdickung, d.h. als Wulst 10 ausgebildet, die mit komplementären Ausnehmungen 11 in den Seitenwänden der Nuten verrasten.

Die Gleitbeläge 4a,b sind vorzugsweise ein Spritzgußteil, wobei die spreizdübelartigen Enden der Stege 8 mit ihren Niederhalteelementen 9, 10 gleichzeitig während des Spritzgießvorganges mit angeformt werden.

Die geometrische Struktur der Gleitbeläge kann auch anders, als in Fig. 4 dargestellt, ausgebildet sein. Beispielsweise könnte pro Quadrant ein Gleitbelag vorgesehen sein.

In Fig. 5a und b ist ein Gleitbelag dargestellt, dessen Steg 8 eine Ausnehmung 12 aufweist. Im hier dargestellten Fall sind die Rastelemente des Steges 8 als Außenkragen 9 ausgebildet (s. auch Figur 2). Sie könnten auch in Analogie zu der in Figur 3 dargestellten Ausführungsform als Wulst 10 ausgebildet sein. In beiden Fällen geht die Ausnehmung 12 ganz durch den Steg 8 in vertikaler Richtung hindurch. An der oberen Seite des Gleitbelages 4a, b ist die Ausnehmung 12 derart ausgebildet, daß sich eine Schulter 14 ergibt. Die Länge der Ausnehmung 12 parallel zum Steg 8 ist beliebig, aber immer kürzer als der Steg 8 selbst.

Das Spreizelement 13 ist komplementär zur Ausnehmung 12 ausgebildet, so daß es formschlüssig mit der Ausnehmung 12 und bündig mit der Gleitoberfläche im Eingriff steht. Das Material, aus dem das Spreizelement 13 besteht, ist beliebig, bevorzugt werden Metall oder Kunststoff. Das Spreizelement 13 ist je nach Länge der Ausnehmung 12 als Bolzen (rund oder eckig) oder als Leiste ausgebildet. Passend zur Schulter 14 weist es einen Kragen 15 auf. In Richtung senkrecht zum Gleitbelag 4a, b ist das Spreizelement 13 mindestens so lang, daß es die Rastelemente des Steges 8 so sehr gegen den Rand der Nut in der Sattelkupplungsplatte 1 drückt, daß die Rastelemente fest mit der Sattelkupplungsplatte 1 verrasten. In dem in Figur 5b dargestellten Ausführungsbeispiel ist das Spreizelement 13 so lang, daß es bündig mit den Rastelementen des Steges 8 abschließt.

## Patentansprüche

1. Sattelkupplung zur gelenkigen Verbindung einer Sattelzugmaschine mit einem Sattelanhänger, mit einer auf der Sattelzugmaschine gehalterten Sattelkupplungsplatte (1), die als Auflagefläche mindestens einen bogenförmigen Gleitbelag (4a, b) besitzt, der an der Sattelkupplungsplatte verdrehsicher befestigt ist, **dadurch gekennzeichnet, daß** die Unterseite des Gleitbelages (4a b) als radial sich von einem virtuellen Mittelpunkt (7) in einer Ausnehmung (3) in der Sattelkupplungsplatte (1) aus erstreckende Stege (8) ausgebildete Formschluß-Verbindungselemente aufweist und die Oberseite der Sattelkupplungsplatte (1) als dazu komplementäre Nuten (6) ausgebildete Formschluß-Verbindungselemente aufweist.

2. Sattelkupplung nach Anspruch 1, **dadurch gekennzeichnet, daß** zur Aufrechterhaltung des Formschlusses Niederhalterelemente in Form von Schrauben vorgesehen sind, die den Gleitbelag (4a b) mit der Sattelkupplungsplatte (1), vorzugsweise im Bereich der Stege, ohne Aufnahme von Scherkräften miteinander verbinden.

3. Sattelkupplung nach Anspruch 1, **dadurch gekennzeichnet, daß** zur Aufrechterhaltung des Formschlusses Niederhalterelemente in Form von clipsartig ausgebildeten, elastisch nachgebenden Rastelementen (8, 9, 10) am freien Ende der Stege (8) vorgesehen sind, die in den Nuten (6, 11) der Sattelkupplungsplatte (1) einrastbar sind.

4. Sattelkupplung nach Anspruch 3, **dadurch gekennzeichnet, daß** die Tiefe der Nuten (6) in der Sattelkupplungsplatte (1) so ausgebildet sind, daß sie deren Dicke entsprechen und die Rastelemente der Stege (8) als gespreizte Enden mit einem Außenkragen (9) ausgebildet sind, die mit der Unterseite der Sattelkupplungsplatte (1) verrasten.

5. Sattelkupplung nach Anspruch 3, **dadurch gekennzeichnet, daß** die Tiefe der Nuten (6) in der Sattelkupplungsplatte (1) nur einem Teil ihrer Dicke entspricht und die Rastelemente als gespreizte Stegenden mit einer Wulst (10) ausgebildet sind, die mit komplementären Ausnehmungen (11) in der Seitenwand der Nuten (6) verrasten.

6. Sattelkupplung nach Anspruch 4 oder 5, **dadurch gekennzeichnet, daß** die Stege (8) von der der Sattelkupplungsplatte (1) abgewandten Seite her Ausnehmungen (12) aufweisen zur Aufnahme von Spreizelementen (13), die die Rastelemente im eingerasteten Zustand arretieren.

7. Sattelkupplung nach einem der Ansprüche 1 bis 6, **dadurch gekennzeichnet, daß** zwei oder mehr als zwei Gleitbeläge (4a, 4b) vorgesehen sind.

8. Sattelkupplung nach einem der Ansprüche 1 bis 7, **dadurch gekennzeichnet, daß** der Gleitbelag (4a, 4b) sowohl peripher innen als auch außen einen Steg ohne komplementäre Nut in der Sattelkupplungsplatte (1) aufweist.

## Claims

1. Fifth wheel for articulated connection of a fifth-wheel tractor with a semi-trailer, having a fifth wheel plate (1) mounted on the fifth-wheel tractor, which has at least one curved slideway lining (4a, b) as bearing surface, which is attached to the fifth wheel plate in a manner resistant to rotation, **characterised in that** the lower side of the slideway lining (4a, b) has positive-locking connecting elements designed as bars (8) extending radially from a virtual centre point (7) in a recess (3) in the fifth wheel plate (1) and the upper side of the fifth wheel plate (1) has positive-locking connecting elements designed as grooves (6) which are complementary thereto.

2. Fifth wheel according to claim 1, **characterised in that** to maintain positive locking, holding-down elements in the form of screws are provided, which connect the slideway lining (4a, b) and the fifth wheel plate (1) to one another, preferably in the region of the bars, without taking up shearing forces.

3. Fifth wheel according to claim 1, **characterised in that** to maintain positive locking, holding-down elements in the form of elastically yielding locking elements (8, 9, 10) designed like a clip are provided at the free end of the bars (8) and can be snapped into the grooves (6, 11) of the fifth wheel plate (1).

4. Fifth wheel according to claim 3, **characterised in that** the depth of the grooves (6) in the fifth wheel plate (1) is designed so that they correspond to the thickness thereof and the locking elements of the bars (8) are designed as splayed ends having an outer collar (9) which lock with the lower side of the fifth wheel plate (1).

5. Fifth wheel according to claim 3, **characterised in that** the depth of the grooves (6) in the fifth wheel plate (1) corresponds to only a part of its thickness and the locking elements are designed as splayed bar ends having a bead (10) which lock with complementary recesses (11) in the side wall of the grooves (6).

6. Fifth wheel according to claim 4 or 5, **characterised in that** the bars (8) have recesses (12) from the side facing away from the fifth wheel plate (1) to receive splaying elements (13), which secure the locking elements in the snapped-in state.

7. Fifth wheel according to one of claims 1 to 6, **characterised in that** two or more than two slideway linings (4a, 4b) are provided.

8. Fifth wheel according to one of claims 1 to 7, **characterised in that** the slideway lining (4a, 4b) has both on the inner periphery and on the outside a bar without complementary groove in the fifth wheel plate (1).

## Revendications

1. Sellette d'attelage destinée à un accouplement articulé d'un véhicule tracteur et d'une remorque, comportant une plaque formant sellette (1) maintenue sur le véhicule tracteur et présentant, en tant que surface d'appui, au moins une garniture de glissement (4a, 4b) en forme d'arc, qui est fixée à la plaque formant sellette d'une manière rigide en torsion, **caractérisée en ce que** la face inférieure de la garniture de glissement (4a, 4b) présente des éléments de fixation à engagement positif, réalisés sous la forme de barrettes (8) qui s'étendent radialement à partir d'un point médian virtuel (7) dans un évidement (3) ménagé dans la plaque formant sellette (1), et **en ce que** la face supérieure de la plaque formant sellette (1) présente des éléments de fixation à engagement positif, réalisés en tant que rainures (6) de formes complémentaires aux éléments réalisés sous la forme de banettes.

2. Sellette d'attelage selon la revendication 1, **caractérisée en ce que**, pour maintenir l'engagement positif, il est prévu des éléments presse-pièce sous la forme de vis, qui relient l'une à l'autre la garniture de glissement (4a, 4b) à la plaque formant sellette (1), de préférence dans la zone des barrettes, sans recevoir de forces de cisaillement.

3. Sellette d'attelage selon la revendication 1, **caractérisée en ce que**, pour maintenir l'engagement positif, il est prévu, au niveau des extrémités libres des barrettes (8), des éléments presse-pièce sous la forme d'éléments encliquetables (8, 9, 10) élastiquement souples et réalisés à la manière d'attaches faisant ressort, qui peuvent être enclenchés dans les rainures (6, 11) prévues dans la plaque formant sellette (1).

4. Sellette d'attelage selon la revendication 3, **caractérisée en ce que** la profondeur des rainures (6), situées dans la plaque formant sellette (1), est telle qu'elle corresponde à l'épaisseur de celle-ci, et **en ce que** les éléments encliquetables des barrettes (8) sont réalisés en tant qu'extrémités écartées et élargies comportant un rebord extérieur (9), qui vient s'encliqueter contre la face inférieure de la plaque formant sellette (1).

5. Sellette d'attelage selon la revendication 3, **caractérisée en ce que** la profondeur des rainures (6), situées dans la plaque formant sellette (1) ne correspond qu'à une partie de l'épaisseur de celle-ci, et **en ce que** les éléments encliquetables sont réalisés en tant qu'extrémités écartées et élargies des barrettes et comportant un bourrelet (10) qui vient s'enclencher dans des évidements (11) de forme complémentaire prévus dans la paroi latérale des rainures (6).

6. Sellette d'attelage selon la revendication 4 ou 5, **caractérisée en ce que** les barrettes (8) présentent, à partir du côté dirigé à l'opposé de la plaque formant sellette (1), des évidements (12) destinés à recevoir des éléments d'écartement (13), qui bloquent les éléments encliquetables à l'état enclenché.

7. Sellette d'attelage selon l'une des revendications 1 à 6, **caractérisée en ce qu'**il est prévu deux garnitures de glissement (4a, 4b) ou plus de deux garnitures de glissement.

8. Sellette d'attelage selon l'une des revendications 1 à 7, **caractérisée en ce que** la garniture de glissement (4a, 4b) présente, aussi bien de manière périphérique interne qu'à l'extérieur, une barrette et ce, sans rainure de forme complémentaire dans la plaque formant sellette (1).
